# EUROPÄISCHE PATENTSCHRIFT

(11) **EP 2 119 615 B1**
(45) Veröffentlichungstag und Bekanntmachung des Hinweises auf die Patenterteilung: **19.01.2011**
(21) Anmeldenummer: 09006056.7
(22) Anmeldetag: 04.05.2009
(51) Int. Cl.: B62D 5/097, B62D 5/32, B62D 5/083

(54) **Hydraulische Lenkeinrichtung**
Hydraulic steering device
Dispositif de direction hydraulique

(30) Priorität: 09.05.2008 DE 102008023034
(43) Veröffentlichungstag der Anmeldung: 18.11.2009
(73) Patentinhaber: Bosch Rexroth AG, 70184 Stuttgart (DE)
(72) Erfinder: Dr. Bergmann, Erhard, 19079 Mirow (DE); Schildmann, Manfred, 19372 Karrenzin (DE); Voß, Gerhard, 19370 Parchim (DE)
(74) Vertreter: Gulde Hengelhaupt Ziebig & Schneider

(56) Entgegenhaltungen:
- DE-A1-102004 021 531
- DE-A1-102006 010 696

## Beschreibung

Die Erfindung bezieht sich auf eine hydraulische Lenkeinrichtung, die aus einem Drehschiebersteuerventil und einer Dosierpumpe besteht, wobei das Drehschiebersteuerventil aus einer äußeren Steuerhülse und einem inneren Steuerkolben besteht, die konzentrisch zueinander angeordnet sind, in einem begrenzten Winkel zueinander verdrehbar sind und miteinander und mit der Dosierpumpe korrespondierende Bohrungen und Kanäle zur Versorgung eines Lenkzylinders besitzen und das Drehschiebersteuerventil zwischen der Dosierpumpe und dem Lenkzylinder jeweils zwei parallele Ölstrompfade besitzt, wobei einer der beiden Pfade in der Neutralstellung geschlossen und der andere der beiden Pfade zum Wechsel zwischen einem Reaktionsbetrieb und einem Nichtreaktionsbetrieb zu- und absperrbar ist.
Derartige Lenkeinrichtungen arbeiten vollhydraulisch und werden vorzugsweise zum Lenken von schweren und langsam fahrenden Fahrzeugen eingesetzt.

Lenkeinrichtungen dieser Art sind allgemein bekannt. Sie bestehen in der Hauptsache aus einem Gehäuse mit einem Zulaufanschluss für eine Versorgungspumpe, einem Ablaufanschluss für einen Tank und zwei Anschlüssen für den Zulauf zu einem Lenkzylinder und dem Rücklauf von dem Lenkzylinder. Im Gehäuse ist ein Drehschiebersteuerventil untergebracht, das aus einer äußeren, im Gehäuse eingepassten Steuerhülse und einem inneren, konzentrisch zur Steuerhülse angeordneten Steuerkolben besteht, die beide gegen die Kraft einer Feder relativ und begrenzt zueinander drehbar sind. Zur Lenkeinrichtung gehört auch eine nach dem Orbitprinzip arbeitende Dosierpumpe, die am Gehäuse angeflanscht ist und die aus einem feststehenden Außenring mit beispielsweise sieben Innenzähnen und einem drehenden Läuferzahnrad mit dann sechs Außenzähnen besteht. Somit bilden sich in der Dosierpumpe sieben volumenveränderliche Kammern aus.

Das im Gehäuse untergebrachte Drehschiebersteuerventil ist einerseits durch den Steuerkolben mechanisch mit einem Lenkrad und andererseits durch die Steuerhülse über eine Antriebswelle mechanisch mit dem Läuferzahnrad der Dosierpumpe verbunden.

Das Drehschiebersteuerventil steht außerdem mit den volumenveränderlichen Kammern der Dosierpumpe über Kommutatorkanäle in hydraulischer Verbindung. Dazu besitzen der Steuerkolben und die Steuerhülse radiale Bohrungen und radiale und axiale Kanäle die zusammen mehrere verstellbare und parallel wirkende Drosseln bilden.

Es ist allgemein bekannt, diese Lenkeinrichtung mit einer Reaktionsfunktion auszuführen, bei der beide Seiten des Lenkzylinders in der Neutralstellung über ein offenes Drehschiebersteuerventil mit der Dosierpumpe verbunden sind. Dadurch übertragen sich die auf die Räder einwirkenden und eine Richtungsänderung verursachenden Fahrwiderstände auf das Lenkrad. Die Reaktionsfunktion ist für den Fahrer sehr komfortabel.

Allgemein bekannt sind auch Lenkeinrichtungen mit einer Nichtreaktionsfunktion, bei der das Drehschiebersteuerventil in der Neutralstellung geschlossen und die beiden Zylinderräume des Lenkzylinders nicht miteinander verbunden sind. Diese Lenkeinrichtungen werden z. B. immer dann eingesetzt, wenn die Lenkung der Räder automatisch und ferngesteuert, beispielsweise durch eine GPS-Führung erfolgt.

Aus der DE 199 35 021 A1 ist eine gattungsgemäβe hydraulische Lenkeinrichtung bekannt, die sowohl ein Reaktionsverhalten ermöglicht, das bei der Straßenfahrt angenehm für den Fahrer ist, als auch ein Nichtreaktionsverhalten, das beispielsweise bei einer GPS-gesteuerten Lenkbetätigung benötig wird. Dazu besitzt das Drehschiebersteuerventil für jede Drehrichtung zwei parallele Pfade, die den Lenkzylinder und die Dosierpumpe während der Lenkbewegung verbinden, wobei in der Neutralstellung einer der beiden Pfade offen und der andere der beiden Pfade geschlossen ausgeführt ist. An der Lenkbewegung im Reaktionsbetrieb sind beide Pfade beteiligt. In dem in der Neutralstellung offenen Pfad befindet sich jeweils ein Absperrventil, das von außen betätigbar ist und das diesen einen Pfad bei Bedarf absperrt. Somit ist für jede Drehrichtung ein Absperrventil vorgesehen, die beide jeweils in der geöffneten Stellung ein Reaktionsverhalten und in der gesperrten Stellung ein Nichtreaktionsverhalten gewährleisten.

Zur konstruktiven Verwirklichung dieser Bedingungen besitzt das Drehschiebersteuerventil für jede Drehrichtung zwei Reihen von Steuerbohrungen mit jeweils unterschiedlichen Querschnitten, wobei der Querschnitt der Steuerbohrungen im offenen und absperrbaren ersten Pfad größer als der Querschnitt der Steuerbohrungen im geschlossenen zweiten Pfad ist.

Diese Ausführung hat aber erhebliche Nachteile.

So ist die Gestaltung der Öffnungscharakteristiken der beiden Pfade sowohl für den Zylinderzulauf als auch für den Zylinderablauf sehr schwierig.

Für den Modus "Reaktion" stehen erfindungsgemäß beide Pfade für den Zu- und Ablauf zur Verfügung, wobei die Pfade naturgemäß eine unterschiedliche Öffnungscharakteristik aufweisen und jeder Pfad für sich die Lenkungsfunktion im Betriebszustand erfüllt. Erfindungsgemäß wird im Modus "Nichtreaktion" sowohl im Zu- als auch im Ablauf jeweils ein Pfad abgesperrt. Dieser Pfad ist im Zulauf derjenige, der die Reaktion ermöglicht und demzufolge die größere Querschnittszunahme beim Auslenken aufweist. Im Ablauf wird ebenfalls ein Pfad abgesperrt, so dass wesentlich weniger Querschnitt zur Verfügung steht.

Es ergibt sich also in den beiden Modi ein höchst unterschiedliches Angebot an Querschnitten für den Zu- und Ablauf, was zu unterschiedlichen Druckverlusten für den Ölstrom zum und vom Lenkzylinder führt und damit das Verhalten der Lenkung wesentlich beeinflusst.

Der Fahrer muss sich darauf immer wieder neu einstellen, was besonders schwierig ist, wenn wie in der Anmeldung vorgesehen, die Umschaltung automatisch geschwindigkeitsabhängig erfolgt.

Dies kann für den Fahrer und seine Umgebung zu unkalkulierbaren Gefahren führen. Aber auch die Herstellung der Lenkeinrichtung verteuert sich, weil für jede Lenkrichtung ein gesondertes Absperrventil vorgesehen ist, was einen großen baulichen Aufwand erfordert.

Es ist daher die Aufgabe der Erfindung, das Lenkungsverhalten bei einer gattungsgemäßen Lenkeinrichtung zwischen der Reaktionsfunktion und der Nichtreaktionsfunktion anzugleichen und den Aufbau zu vereinfachen.

Diese Aufgabe wird dadurch gelöst, dass der in der Neutralstellung geschlossene erste Pfad als Hauptpfad für den Lenkungsbetrieb und der absperrbare zweite Pfad als Hilfspfad für die Reaktion in der Neutralstellung ausgelegt sind.

Zweckmäßige Ausgestaltungsformen ergeben sich aus den Unteransprüchen 2 bis 7. Die neue Lenkeinrichtung beseitigt die genannten Nachteile des Standes der Technik. Dabei liegt der besondere Vorteil in den verbesserten Gebrauchseigenschaften.

So fließt der Ölstrom von der Dosierpumpe zum Lenkzylinder und zurück während der Lenkbewegung sowohl im Reaktionsbetrieb als auch im Nichtreaktionsbetrieb im Wesentlichen über dieselben Steueröffnungen des ersten Hauptpfades. Die parallelen Steueröffnungen des zweiten absperrbaren Pfades sind dabei so klein gehalten, dass sie sich während der Lenkbewegung nur in einer zu vernachlässigenden Weise an der Ölströmführung beteiligen und während der Neutralstellung allein als Hilfsöffnungen für den Reaktionsbetrieb dienen. Das schafft in beiden Betriebsarten gleiche Strömungsverhältnisse und damit gleiche Lenkbedingungen.

Diese neue Lenkeinrichtung hebt sich von dem Stand der Technik insbesondere dadurch ab, dass sie als eine Weiterentwicklung einer Lenkeinrichtung mit einer Nichtreaktion anzusehen ist. Da bei dieser Ausführung in der Neutralstellung bereits eine geschlossene Ebene vorhanden ist, ist es möglich, die abschaltbaren Steueröffnungen der zweiten und parallelen Ebene in ihren Dimensionen und Anordnungen frei auszuwählen. Erst das schafft den konstruktiven Freiraum, die abschaltbaren Steueröffnungen der zweiten Ebene als reine Reaktionsöffnungen auszulegen.

Zur Realisierung der funktionellen Abschaltung der Steueröffnungen der zweiten Ebene ist es zweckmäßig, die zweite Ebene für die eine Lenkrichtung und die zweite Ebene für die andere Lenkrichtung in einem Zuge durch ein gleiches Steuersignal zu- und abzusperren. Dazu eignet sich ein 4/2-Wegeventil in besonderer Weise, weil die Funktion sicher und der Herstellungsaufwand gering ist.

Die Erfindung soll anhand eines Ausführungsbeispieles näher erläutert werden.

Dazu zeigen:
- Fig. 1:: ein vereinfachtes Funktionsschaltbild der hydraulischen Lenkeinrichtung,
- Fig. 2:: eine hydraulische Lenkeinrichtung im Schnitt,
- Fig. 3:: das abgewickelte Drehschiebersteuerventil in der Reaktionsausführung und
- Fig. 4:: das abgewickelte Drehschiebersteuerventil in der Nichtreaktionsausfüh- rung.

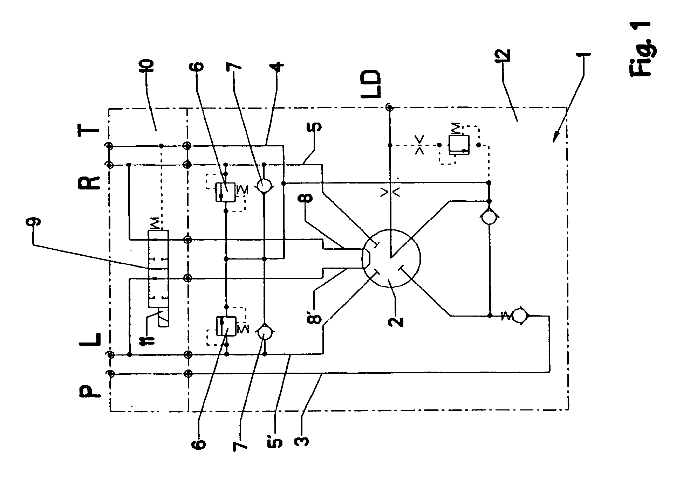

Gemäß der Fig. 1 besitzt die hydraulische Lenkeinrichtung 1 einen Zulaufanschluss P für den Versorgungsölstrom, zwei Verbraucheranschlüsse L und R für die beiden Kammern eines nicht gezeigten Lenkzylinders, einen Rücklaufanschluss T zu einem Tank und in diesem Beispiel einen Lastsignalanschluss LD für ein Prioritätsventil, das den von der Versorgungspumpe gelieferten Versorgungsstrom zwischen der Lenkeinrichtung und einer Arbeitshydraulik bedarfsgerecht aufteilt. Die Erfindung ist aber auch bei Lenkungen in open-center-Ausführung anwendbar. Die Verbindungen zwischen den genannten Anschlüssen P, T, L, R und einer hier nicht gezeigten Dosierpumpe erfolgt über ein Drehschiebersteuerventil 2, das hier in einer closed-center-Ausführung zwischen dem Zulaufanschluss P und dem Rücklaufanschluss T dargestellt ist. Zwischen dem Zulaufanschluss P und dem Drehschiebersteuerventil 2 besteht eine Zulaufleitung 3 und zwischen dem Drehschiebersteuerventil 2 und dem Rücklaufanschluss T ist eine Rücklaufleitung 4 vorgesehen. Weiterhin besitzt die Lenkeinrichtung 1 zwischen dem Drehschiebersteuerventil 2 und den beiden Zylinderanschlüssen L, R jeweils einen Hauptpfad für den Lenkbetrieb 5,5', der in Abhängigkeit von der Lenkrichtung eine Zulaufleitung oder eine Rücklaufleitung ist. In üblicher Weise befinden sich zwischen den beiden Hauptpfaden 5,5' zwei Schockventile 6 und zwei Nachsaugventile 7.

Zu jedem Hauptpfad 5,5' besteht ein zweiter Hilfspfad für den Reaktionsbetrieb 8, 8', der parallel zum ersten Hauptpfad 5,5' angeordnet ist.

In einer zweckmäßigen Ausführung ist an die Lenkeinrichtung 1 ein Gehäuse 10 angeflanscht. Durch dieses Gehäuse 10 werden die Leitungen 3 und 4 sowie die Hauptpfade 5 und 5' hindurchgeführt. Die Hilfspfade 8 und 8' münden ebenfalls in das Gehäuse 10 zu einem darin befindlichen Absperrventil 9 und werden von diesem wahlweise mit den Hauptfaden 5 und 5' verbunden oder von diesen getrennt.

Das Absperrventil 9 kann in beliebiger Weise durch ein Betätigungselement 11 geschaltet werden.

Es versteht sich, dass das Absperrventil 9 auch innerhalb der Lenkeinrichtung 1 untergebracht oder das Gehäuse 10 auch getrennt von der Lenkeinrichtung 1 angeordnet werden kann.

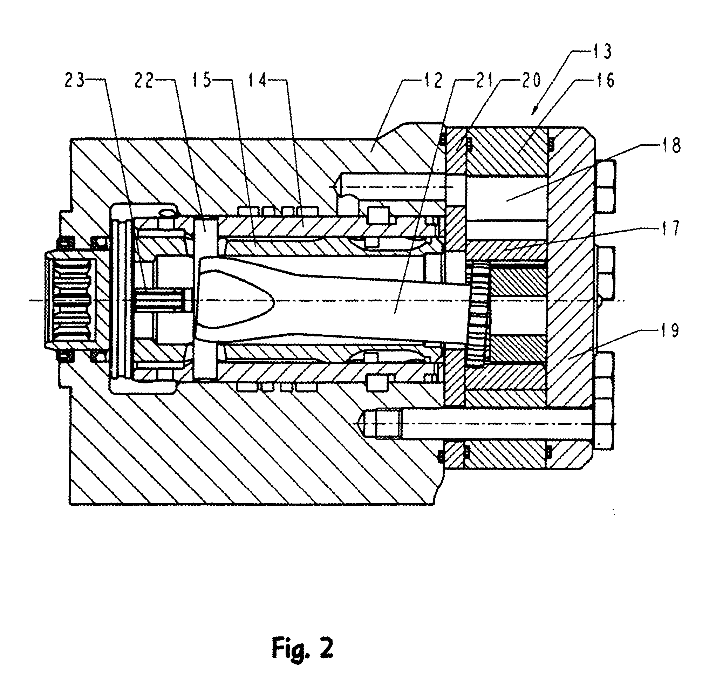

Nach der Fig. 2 besteht die hydraulische Lenkeinrichtung 1 konstruktiv in der Hauptsache aus einem Gehäuse 12 mit dem Drehschiebersteuerventil 2 und der nach dem Gerotorprinzip arbeitenden Dosierpumpe 13, die stirnseitig an das Gehäuse 12 angeflanscht ist, wobei das Drehschiebersteuerventil 2 aus einer äußeren, im Gehäuse 12 eingepassten Steuerhülse 14 und einem inneren, in der Steuerhülse 14 laufenden Steuerkolben 15 gebildet wird. Die Dosierpumpe 13 besteht aus einem innen verzahnten Außenring 16 und aus einem außen verzahnten, einen Zahn weniger aufweisenden Rotor 17, die zwischen sich mehrere volumenveränderliche Verdrängerkammern 18 ausbilden. Diese Verdrängerkammern 18 sind über Kanäle im Gehäuse 12 hydraulisch mit dem Drehschiebersteuerventil 2 und dem Lenkzylinder verbunden. Die Dosierpumpe 13 ist dabei mit einem Deckel 19 und einer Zwischenscheibe 20 mit dem Gehäuse 12 verschraubt. Der innen liegende Steuerkolben 15 des Drehschiebersteuerventils 2 hat eine drehfeste Verbindung mit einem nicht dargestellten Handrad. Innerhalb des Steuerkolbens 15 ist eine Antriebswelle 21 angeordnet, die einerseits über ein Zahnnabenprofil mit dem Rotor 17 der Dosierpumpe 13 und andererseits über einen, den Steuerkolben 15 durchdringenden Stift 22 mit der äußeren Steuerhülse 14 verbunden. Dieser Stift 22 begrenzt im Zusammenspiel mit einer vergrößerten Bohrung im inneren Steuerkolben 22 den Verdrehwinkel zwischen der Steuerhülse14 und dem Steuerkolben 15 auf etwa 9°. Die Steuerhülse 14 und der Steuerkolben 15 stützen sich innerhalb des begrenzten Verdrehwinkels durch ein radial angeordnetes Federelement 23 gegenseitig ab.

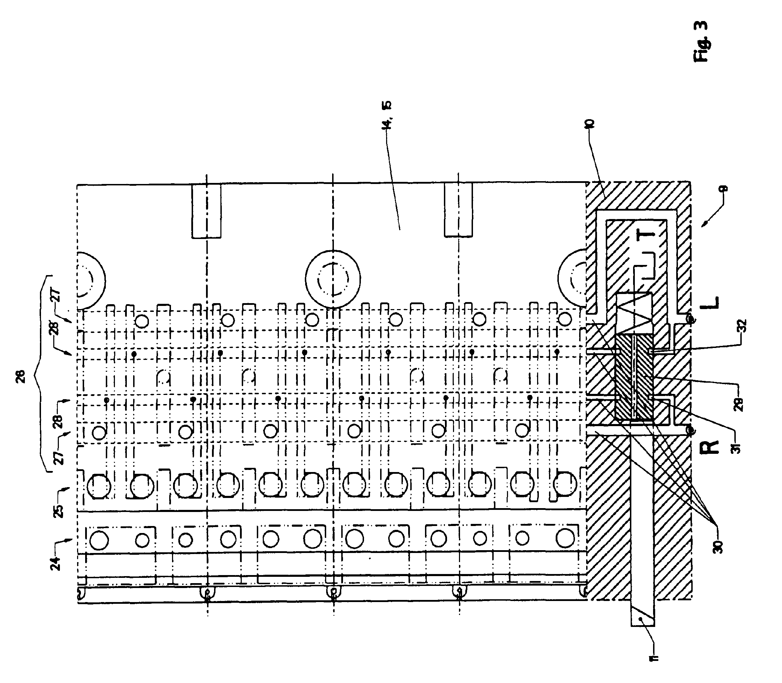

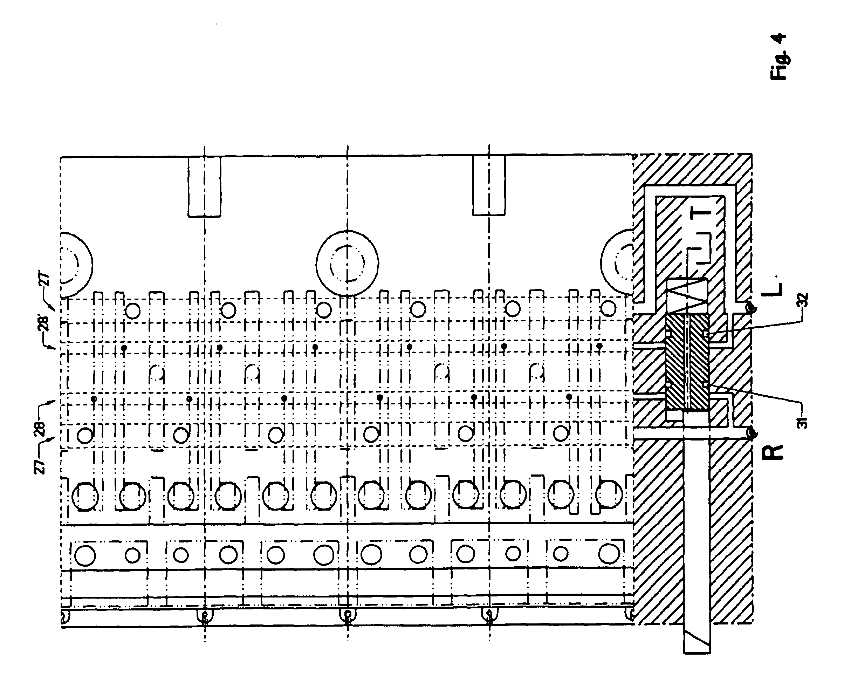

Aus den Fig. 3 und 4 ergeben sich die äußere Steuerhülse 14 und der unsichtbar dargestellte innere Steuerkolben 15. Aus den axialen Steuernuten des Steuerkolbens 15 und den verschiedenen Reihen von Bohrungen in der Steuerhülse 14 ergeben sich verschieden Ebenen von verstellbaren Steueröffnungen. So bilden sich zunächst ein Zulaufkanal 24, eine Ebene von Steueröffnungen 25 für die Verbindung zur und von der Dosierpumpe 13 und die Ebenen der Steueröffnungen 26 für die Hauptpfade 5,5' und Hilfspfade 8, 8'.

Zu diesen Steueröffnungen 26 gehören die Ebene der Steueröffnungen 27, 27' für den ersten Hauptpfad 5,5' und die Ebene der Steueröffnungen 28, 28' für den zweiten Hilfspfad 8, 8'. Dabei führen in einer ausgewählten Lenkrichtung 1 die Steueröffnungen 27 und 28 zum Lenkzylinder hin und die Steueröffnungen 27' und 28' vom Lenkzylinder zurück.

Die Steueröffnungen 28 und 28' des Hilfspfades 8, 8' sind von den Steuerbohrungen 27, 27' abschaltbar ausgeführt. Dazu ist das steuerbare Absperrventil 9 vorgesehen, dessen Gehäuse 10 am Gehäuse 12 der Lenkeinrichtung 1 angeflanscht ist. Dieses Absperrventil 9 besteht aus einem Gehäuse 10 und einem Ventilschieber 29, wobei der Ventilschieber 29 einerseits durch eine Feder belastet und andererseits von einem Betätigungselement 11 beaufschlagbar ist. Das Betätigungselement 11 gehört beispielsweise zu einer elektrischen Stelleinheit. Das Gehäuse 10 besitzt vier Kanäle 30, die mit jeweils einer der Ebenen von Haupt- und Hilfspfaden 27, 28, 27' und 28' verbunden sind, während der Ventilschieber 29 einen ersten Ringkanal 31 und einen zweiten Ringkanal 32 besitzt.

In der unbetätigten Stellung des steuerbaren Absperrventils 9 gemäß der Fig. 3 verbindet der erste Ringkanal 31 den einen Zylinderanschluss R mit dem Hilfspfad 28, während der zweite Ringkanal 32 den anderen Zylinderanschluss L mit dem Hilfspfad 28' in Verbindung bringt.

Damit ist der Zylinderanschluss R sowohl in der Neutralstellung der Lenkeinrichtung 1 als auch bei der Lenkbewegung mit den Ebenen 27 und 28 verbunden, während L mit 27' und 28' in Verbindung steht.

In der Neutralstellung der Lenkeinrichtung 1 ist damit der Modus "Reaktion" möglich. Bei der Lenkbewegung ist der Anteil des dosierten Ölstroms, der über die Steueröffnungen 28 und 28' der Hilfspfade 8 und 8' fließt, wegen des geringen Querschnitts vernachlässigbar klein.

In der betätigten Stellung des Absperrventils 9 gemäß der Fig. 4 wird die Verbindung 27 mit 28 und 27' mit 28' unterbrochen. Damit ist der Modus "Nichtreaktion" eingestellt. Der Ölstrom fließt beim Lenken ausschließlich über die Steueröffnungen 27 und 27' der Hauptpfade 5 und 5'. Der Querschnittsunterschied zum Modus "Reaktion" ist aber verschwindend gering.

Die Funktion der hydraulischen Lenkeinrichtung ist hinreichend bekannt.

Bei einer nicht betätigten Lenkeinrichtung befindet sich das Drehschiebersteuerventil 2 in der Neutralstellung, wo sich der innere Steuerkolben 15 und die äußere Steuerhülse 14 zentrieren und alle wesentlichen, zur Dosierpumpe 13 und zum Lenkzylinder führenden Verbindungen geschlossen sind. Die nicht betätigte Stellung des steuerbaren Absperrventils 9 hält über die Verknüpfung der Hauptpfade 5, 5' mit den Hilfspfaden 8, 8' eine Verbindung zwischen der Dosierpumpe und dem Lenkzylinder offen, die in der Neutralstellung die Funktion einer Reaktion gewährleistet. Zur Einstellung der Nichtreaktion wird das steuerbare Absperrventil 9 betätigt, sodass die Verbindungen der Hauptpfade 5, 5' mit den Hilfspfaden 8, 8' getrennt werden.

Bei einer Auslenkung des Drehschiebersteuerventils 2 beispielsweise nach rechts werden der Steuerkolben 15 und die Steuerhülse 14 entgegen der Kraft des Federelementes 23 aus ihrer Mittelstellung in eine Arbeitsstellung verdreht, wodurch sich entsprechende Steuerkanäle öffnen. Dadurch gelangt der Ölstrom über das Drehschiebersteuerventil 2 zur Dosierpumpe 13, wo er bedarfsgerecht bemessen und dann wieder über das Drehschiebersteuerventil 2 zum Lenkzylinder geführt wird. Auf diesem Wege passiert das Öl zunächst den Zulaufkanal 24 zum Drehschiebersteuerventil 2 und von dort die Steueröffnungen 25 für den Zulauf zur und den Rücklauf von der Dosierpumpe 13. Das Öl gelangt dann über die Steueröffnungen 27, 28 zum Lenkzylinder und bewirkt, dass sich die Räder verstellen. Dabei strömt das aus dem Lenkzylinder verdrängte Öl über die Steueröffnungen 27' und dann über die Rücklaufleitung 4 zum Tank.

In der für den Reaktionsbetrieb maßgeblichen nicht betätigten Stellung des steuerbaren Absperrventils 9 gemäß der Fig. 3 sind die Hauptpfade 5, 5' und Hilfspfade 8, 8' miteinander verbunden, sodass beide Ebenen an der Lenkbetätigung beteiligt sind. Dagegen ist in der für den Nichtreaktionsbetrieb maßgeblichen Stellung des steuerbaren Absperrventils 9 nach der Fig. 4 die-Hauptpfade 5, 5' und Hilfspfade 8, 8' getrennt, sodass nur die Hauptpfade 5, 5' an der Lenkbewegung beteiligt sind.

### Liste der Bezueszeichen

- 1: Lenkeinrichtung
- 2: Drehschiebersteuerventil
- 3: Zulaufleitung
- 4: Rücklaufleitung
- 5 5': Hauptpfad für den Lenkbetrieb
- 6: Schockventil
- 7: Nachsaugventil
- 8 8': Hilfspfad für den Reaktionsbetrieb
- 9: steuerbares Absperrventil
- 10: Gehäuse für Absperrventil
- 11: Betätigungselement
- 12: Gehäuse für Lenkeinrichtung
- 13: Dosierpumpe
- 14: Steuerhülse
- 15: Steuerkolben
- 16: Außenring
- 17: Rotor
- 18: Verdrängerkammern
- 19: Deckel
- 20: Zwischenscheibe
- 21: Antriebswelle
- 22: Stift
- 23: Federelement
- 24: Zulaufkanal
- 25: Steueröffnungen für die Dosierpumpe
- 26: Steueröffnungen für die Zylinderleitungen
- 27 27': Steueröffnungen für den Hauptpfad 5, 5'
- 28 28': Steueröffnungen für den Hilfspfad 8, 8'
- 29: Ventilschieber
- 30: Kanäle
- 31: erster Ringkanal
- 32: zweiter Ringkanal
- P: Zulaufanschluss
- T: Rücklaufanschluss
- L: Verbraucheranschluss
- R: Verbraucheranschluss
- LD: Lastsignalanschluss

## Patentansprüche

1. Hydraulische Lenkeinrichtung, bestehend aus einem Drehschiebersteuerventil (2) und einer Dosierpumpe (13), wobei
- das Drehschiebersteuerventil (2) aus einer äußeren Steuerhülse (14) und einem inneren Steuerkolben (15) besteht, die konzentrisch zueinander angeordnet sind, in einem begrenzten Winkel zueinander verdrehbar sind und miteinander und mit der Dosierpumpe (13) korrespondierende Bohrungen und Kanäle zur Versorgung eines Lenkzylinders besitzen und
- das Drehschiebersteuerventil (2) zwischen der Dosierpumpe (13) und dem Lenkzylinder zwei parallele Pfade (5, 8 und 5', 8') besitzt, wobei einer der beiden Pfade (5, 5') in der Neutralstellung geschlossen und der andere der beiden Pfade ( 8, 8') zum Wechsel zwischen einem Reaktionsbetrieb und einem Nichtreaktionsbetrieb zu- und absperrbar ist,
**dadurch gekennzeichnet, dass** der in der Neutralstellung geschlossene erste Pfad (5, 5') als Hauptpfad für den Lenkungsbetrieb und der absperrbare zweite Pfad (8, 8') als Hilfspfad für den Reaktionsbetrieb in der Neutralstellung ausgelegt sind.

2. Hydraulische Lenkeinrichtung nach Anspruch 1,
**dadurch gekennzeichnet, dass** die Steueröffnungen (28, 28') für den absperrbaren Hilfspfad (8, 8') einen kleineren Querschnitt aufweisen als die Steueröffnungen (27, 27') für den in der Neutralstellung geschlossenen ersten Hauptpfad (5, 5').

3. Hydraulische Lenkeinrichtung nach Anspruch 2,
**dadurch gekennzeichnet, dass** der Querschnitt der in der Neutralstellung geschlossenen Steueröffnungen (27, 27') für den geschlossenen Hauptpfad (5, 5') so groß gewählt wird, dass er allein für den Lenkbetrieb ausreichend ist.

4. Hydraulische Lenkeinrichtung nach Anspruch 3,
**dadurch gekennzeichnet, dass** der Querschnitt der Steueröffnungen (28, 28') für den absperrbaren Hilfspfad (8, 8') so klein gewählt wird, dass er im Wesentlichen lediglich zur Gewährleistung des Reaktionsbetriebs in Neutralstellung geeignet ist.

5. Hydraulische Lenkeinrichtung nach Anspruch 1,
**dadurch gekennzeichnet, dass** ein steuerbares Absperrventil (9) zur Absperrung der Steueröffnungen (28, 28') für den Hilfspfad (8, 8') so ausgelegt ist, dass die Steueröffnungen (28) für die eine Lenkrichtung und die Steueröffnungen (28') für die andere Lenkrichtung gleichzeitig und durch ein gemeinsames Steuersignal zu- und abgesperrt werden.

6. Hydraulische Lenkeinrichtung nach Anspruch 5,
**dadurch gekennzeichnet, dass** das steuerbare Absperrventil (9) sich in einem Gehäuse (10) befindet, dass direkt an die Lenkeinrichtung (1) angeflanscht ist und nicht mehr Anschlüsse nach außen führen, als bei einer vergleichbaren Lenkeinrichtung ohne angeflanschtes Absperrventil (9).

7. Hydraulische Lenkeinrichtung nach Anspruch 6,
**dadurch gekennzeichnet, dass** die Hauptpfade (5, 5') ständig mit den Anschlüssen R und L des steuerbaren Absperrventils (9) verbunden sind.

## Claims

1. Hydraulic steering device, consisting of a rotary slide control valve (2) and a metering pump (13), wherein
- the rotary slide control valve (2) consists of an outer control sleeve (14) and an inner control piston (15) which are arranged concentrically to each other, rotatable to each other within a limited angle, and have bores and channels corresponding with each other and with the metering pump (13) to feed a steering cylinder, and
- the rotary slide control valve (2) has two parallel paths (5, 8 and 5', 8') between the metering pump (13) and the steering cylinder, one of the two paths (5, 5') being closed in the neutral position and the other one of the two paths (8, 8') being lockable for change between a reaction operation and a non-reaction operation,
**characterised in that** the first path (5, 5') closed in the neutral position is designed as a main path for the steering operation and the lockable second path (8, 8') is designed as an auxiliary path for the reaction operation in the neutral position.

2. Hydraulic steering device according to claim 1,
**characterised in that** the control openings (28, 28') for the lockable auxiliary path (8, 8') comprise a smaller cross section than the control openings (27, 27') for the first main path (5, 5') closed in the neutral position.

3. Hydraulic steering device according to claim 2,
**characterised in that** the cross section of the control openings (27, 27') closed in the neutral position for the closed main path (5, 5') is selected to be so large that it is alone sufficient for the steering operation.

4. Hydraulic steering device according to claim 3,
**characterised in that** the cross section of the control openings (28, 28') for the lockable auxiliary path (8, 8') is selected to be so small that it is substantially only adapted to assure the reaction operation in the neutral position.

5. Hydraulic steering device according to claim 1,
**characterised in that** a controllable shut-off valve (9) for locking up the control openings (28, 28') for the auxiliary path (8, 8') is designed in such a way that the control openings (28) for the one steering direction and the control openings (28') for the other steering direction are locked simultaneously and by a common control signal.

6. Hydraulic steering device according to claim 5,
**characterised in that** the controllable shut-off valve (9) is in a housing (10) which is flanged directly to the steering device (1) and not more cylinder connections lead outward than in a comparable steering device without a flanged shut-off valve (9).

7. Hydraulic steering device according to claim 6,
**characterised in that** the main paths (5, 5') are constantly connected to the connections R and L of the controllable shut-off valve (9).

## Revendications

1. Dispositif de direction hydraulique, consistant en une soupape (2) de commande à tiroir rotatif et une pompe (13) de dosage, dans lequel
- la soupape (2) de commande à tiroir rotatif consiste en une douille (14) externe de commande et un piston (15) interne de commande disposés concentriquement l'un par rapport à l'autre, pouvant tourner l'un par rapport à l'autre suivant un angle limité, et ayant des perçages et des canaux correspondant entre eux et avec la pompe (13) de dosage pour alimenter un cylindre de direction, et
- la soupape (2) de commande à tiroir rotatif a deux chemins (5, 8 et 5', 8') parallèles situés entre la pompe (13) de dosage et le cylindre de direction, l'un des deux chemins (5, 5') étant fermé dans la position neutre et l'autre des deux chemins (8, 8') pouvant être fermé et obturé pour le change entre une opération de réaction et une opération de non-réaction,
**caractérisé en ce que** le premier chemin (5, 5') fermé dans la position neutre est conçu comme un sentier principal pour l'opération de direction, et que le second chemin (8, 8') pouvant être obturé est conçu comme un chemin auxiliaire pour l'opération de réaction dans la position neutre.

2. Dispositif de direction hydraulique selon la revendication 1,
**caractérisé en ce que** les ouvertures (28, 28') de commande pour le chemin (8, 8') auxiliaire pouvant être obturé comprennent une section transversale plus petite que les ouvertures (27, 27') pour le premier chemin (5, 5') principal fermé dans la position neutre.

3. Dispositif de direction hydraulique selon la revendication 2,
**caractérisé en ce que** la section transversale des ouvertures (27, 27') de commande fermées dans la position neutre pour le chemin (5, 5') principal fermé est sélectionnée suffisamment grande pour qu'elle soit seule suffisante pour l'opération de direction.

4. Dispositif de direction hydraulique selon la revendication 3, **caractérisé en ce que** la section transversale des ouvertures (28, 28') de commande pour le chemin (8, 8') auxiliaire pouvant être obturé est sélectionnée suffisamment petite pour qu'elle soit sensiblement adaptée seulement pour assurer l'opération de réaction dans la position neutre.

5. Dispositif de direction hydraulique selon la revendication 1, **caractérisé en ce qu'**une soupape (9) d'arrêt commandable pour obturer les ouvertures (28, 28') de commande pour le chemin (8, 8') auxiliaire est conçue de telle manière que les ouvertures (28) de commande conçues pour l'un sens de direction et les ouvertures (28') de commande conçues pour l'autre sens de direction soient fermées et obturées simultanément et par un signal de commande commun.

6. Dispositif de direction hydraulique selon la revendication 5, **caractérisé en ce que** la soupape (9) d'arrêt commandable est dans un boîtier (10) bridé directement sur le dispositif (1) de direction, et qu'il n'y a pas plus de raccordements menant à l'extérieur qu'au cas d'un dispositif de direction comparable n'ayant pas de soupape (9) d'arrêt bridée.

7. Dispositif de direction hydraulique selon la revendication 6, **caractérisé en ce que** les chemins (5, 5') principaux sont reliés en permanence aux raccordements R et L de la soupape (9) d'arrêt commandable.
